# EUROPEAN PATENT APPLICATION

(11) **EP 3 366 833 A1**
(43) Date of publication of application: **29.08.2018**
(21) Application number: 15906752.9
(22) Date of filing: 21.10.2015
(51) Int. Cl.: D06H 5/00

(54) **FABRIC BONDING STRUCTURE AND FABRIC PROCESSED PRODUCT COMPRISING SAME**

(30) Priority: 20.10.2015 KR 20150146325
(71) Applicant: Youngone Corporation, Seoul 04500 (KR)
(72) Inventor: SUNG, Ki Hak, Seoul 03086 (KR)
(74) Representative: Zardi, Marco
(86) International application number: PCT/KR2015/011152
(87) International publication number: WO 2017/069301

(57) **Abstract**

The present invention relates to a structure for bonding a fabric, and a processed fabric article having the same. According to the prevention, the structure for bonding a fabric includes: a first fabric; a second fabric; and a bonding member, wherein attachment surfaces attached with the first fabric and the second fabric, respectively, and sewing lines spaced apart from the attachment surfaces, and sewed in a state of being in contact with center portions of the attachment surfaces are sequentially formed from both ends toward an inner side with respect to a center axis in a longitudinal direction of the bonding member.

According to the present invention, it is possible to isolate fillings filled inside a fabric from the outside even without forming a sewing line, and bonding force at a bonding portion is excellent compared to a method of forming a sewing line or a bonding method using simply an adhesive in the related art, it is possible to prevent undesired discharge (leakage) of the fillings, and air permeability between inner spaces filled with the fillings is excellent and thus restoration force of an entire processed fabric article is excellent.

## Description

### TECHNICALFIELD

The present invention relates to a fabric bonding structure and a processed fabric article having the same, and more particularly, to a fabric bonding structure, in which fabric may be bonded without sewing, and a processed article, such as clothes and bedclothes, having the fabric bonding structure.

### BACKGROUNDART

Various kinds of fabric, such as textile and leather, have been used as fundamental materials for manufacturing clothes, bedclothes, and the like. In general, clothes, bedclothes, or the like are produced by first cutting a fabric having a predetermined size in accordance with a shape of clothes desired to be produced, and connecting the cut fabrics with each other by sewing the cut fabrics.

In this process, an inner side of the clothes is filled with fillings and the like for keeping warmth. For example, cotton, synthetic resin cotton, animal hair, such as duck down and goose down, and the like may be filled. However, when the fabrics are connected by the manner of sewing the fabrics which are cut in predetermined shapes, a sewing line including needle holes is inevitably created in a connection portion of the fabrics. Goose down and the like among the fillings may be discharged (leaked) to the outside through the sewing line.

When a bonding structure using an adhesive and the like is used in order to prevent the fillings from being discharged (leaked) to the outside, there is a problem in that bonding force deteriorates due to long-term use or a bonding structure is deformed due to sudden application of external force. A bonding structure for isolating the fillings from inner/outer sides of clothes is an issue directly connected to a product quality and durability of clothes, so that a lot of research thereon has been conducted.

However, a technique satisfying all of improvement of durability of the bonding structure and a function of preventing the fillings from being discharged (leaked) to the outside is not sufficient yet.

### DISCLOSURE OF INVENTION

### TECHNICAL PROBLEM

The present invention has been made in an effort to provide a fabric bonding structure, in which fabrics may be bonded without sewing and which has excellent bonding force at a bonding portion, and a processed fabric article having the same.

The present invention has also been made in an effort to provide a fabric bonding structure, which has excellent air permeability between internal divided spaces and prevents fillings like from being arbitrarily discharged (leaked) to the outside, and a processed fabric article having the same.

### TECHNICAL SOLUTION

An exemplary embodiment of the present invention provides a structure for bonding a fabric, including: a first fabric; a second fabric provided so as to be adjacent to the first fabric; and a bonding member, in which attachment surfaces attached with the first fabric and the second fabric, respectively, and sewing lines spaced apart from the attachment surfaces, and sewed in a state of being in contact with center portions of the attachment surfaces are sequentially formed from both ends toward an inner side based on a center axis in a longitudinal direction of the bonding member.

A folding line, along which the bonding member is folded, may be formed between the attachment surface and the sewing line.

The bonding member may be provided with a division surface defined as a predetermined region between the pair of sewing lines, and the division surface may divide a space between the first fabric and the second fabric.

The structure may further include a reinforcing member, of which both lateral surfaces are attached to the attachment surface and the division surface, respectively.

The bonding member may be formed of a mesh fabric.

The attachment surfaces of the bonding member may be bonded to the first fabric and the second fabric, respectively, by using an adhesive.

The bonding member may be formed in a strap form.

The attachment surface and the sewing line may be symmetrically formed base on the center axis of the longitudinal direction of the bonding member.

Fillings may be filled in a space between the first fabric and the second fabric divided by the bonding member.

The fillings may include at least one of hair of mammals, hair of birds, cotton, and synthetic cotton.

Another exemplary embodiment of the present invention provides a processed fabric article including the aforementioned constituent elements.

### ADVANTAGEOUS EFFECTS

According to the fabric bonding structure according to the present invention and the processed fabric article having the same, it is possible to isolate fillings filled inside a fabric from the outside even without forming a sewing line, and bonding force at a bonding portion is excellent compared to a method of forming a sewing line or a bonding method using an adhesive in the related art.

Further, according to the present invention, a sewing line exposed to filling is not formed, so that it is possible to prevent undesired discharge of the fillings, and air permeability between inner spaces filled with the fillings is excellent and thus restoration force of an entire processed fabric article is excellent.

### BRIEF DESCRIPTIONOFTHE DRAWINGS

FIG. 1 is a rear view schematically illustrating clothes having a bonding structure according to an exemplary embodiment of the present invention.
FIG. 2 is a cut perspective view illustrating a region R1 of the clothes illustrated in FIG. 1.
FIGs. 3 to 6 are schematic diagrams sequentially illustrating a manufacturing process of a bonding member according to an exemplary embodiment of the present invention.
FIGs. 7 and 8 are schematic diagrams illustrating a case where a space between fabrics is divided by using the bonding member according to the exemplary embodiment of the present invention.
FIG. 9 is a cut perspective view schematically illustrating a state of a processed fabric article according to another exemplary embodiment of the present invention.

### BEST MODE FOR CARRYING OUT THE INVENTION

An exemplary embodiment of the present invention provides a structure for bonding a fabric, including: a first fabric; a second fabric provided so as to be adjacent to the first fabric; and a bonding member, in which attachment surfaces attached with the first fabric and the second fabric, respectively, and sewing lines spaced apart from the attachment surfaces, and sewed in a state of being in contact with center portions of the attachment surfaces are sequentially formed from both ends toward an inner side based on a center axis in a longitudinal direction of the bonding member.

### DETAILEDDESCRIPTION

Hereinafter, exemplary embodiments of the present invention will be described with reference to the accompanying drawings. Unless there is a special definition or mention, terms indicating a direction used in the present description are based on a state illustrated in the drawing. Further, the same reference numeral designates the same member throughout each exemplary embodiment. In the meantime, for convenience of the description, a thickness or a size of each constituent element illustrated in the drawings may be exaggerated, and it does not mean that the constituent element needs to be actually configured with a corresponding size or a ratio between the elements.

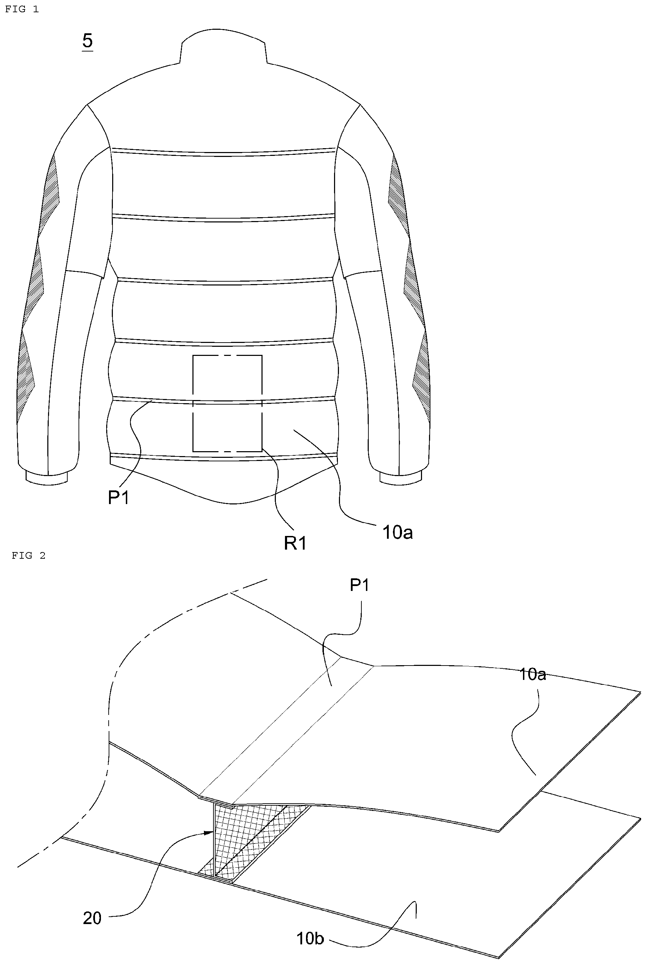

A fabric bonding structure will be described with reference to FIGS. 1 to 2. FIG. 1 is a rear view schematically illustrating clothes having a bonding structure, and FIG. 2 is a cut perspective view illustrating a region R1 of the clothes illustrated in FIG. 1.

Clothes may adopt a bonding structure for bonding inner and outer fabrics by various manners as necessary. For example, as illustrated in FIG. 1, for a top filled with a lagging material inside thereof, an outer fabric 10a according to an exterior appearance may be provided with a plurality of bonding parts PI, which is directly bonded to an inner fabric or is bonded to the inner fabric through a separate bonding member. Particularly, a jacket, such as a goose down jacket, filled with lagging fillings may be provided with the bonding parts PI for preventing the fillings from being concentrated to a lower side due to gravity or from being agglomerated at one side during a washing process, and dividing a region filled with the fillings into a plurality of regions so as to implement an uniform thermal keeping property.

Referring to FIG. 2, predetermined spaces are formed between the outer fabric 10a and an inner fabric 10b so as to be filled with the fillings, and the bonding parts PI for dividing the spaces are formed. The bonding part PI may be implemented by a manner of forming a sewing line in a predetermined region P3, or forming an adhesive layer 21 inside the bonding part P1. However, when the sewing line is formed, the filling filled inside the spaces between the outer fabric 10a and the inner fabric 10b may be discharged (leaked) to the outside through small holes of the sewing line. When a thick thread for bonding is used for sufficient bonding force, needle holes of the sewing line are increased, so that the discharge of the fillings to the outside may become more severe.

As a method of overcoming a disadvantage of the sewing line, an adhesive may be used. However, when the adhesive is used, separation force between the outer fabric 10a and the inner fabric 10b is concentrated to a region P2 in which a bonding part according to a cross-section view begins, so that the bonding part PI may be easily damaged during a long-term degradation process of the adhesive or a separation process of the outer fabric 10a and the inner fabric 10b by a temporal impact.

The long-term or short-term degradation of the bonding force may be equally generated even when the sewing line is formed or the sewing line and the adhesive layer are simultaneously formed.

The present invention relates to a fabric bonding structure capable of preventing bonding force from deteriorating and preventing fillings from being discharged (leaked) to the outside, and inner and outer fabrics 10a and 10b are bonded by using a separate bonding member 20 inside a bonding part P1.

This will be described in detail below.

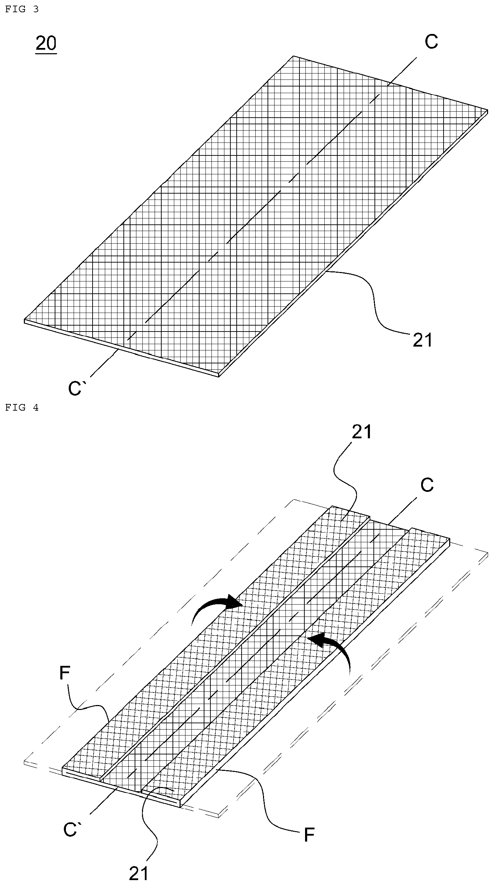

The bonding member will be described with reference to FIGS. 3 to 6. FIGs.3 to 6 are schematic diagrams sequentially illustrating a manufacturing process of the bonding member according to an exemplary embodiment.

The bonding member 20 according to the present exemplary embodiment may be formed of a mesh member shaped like a strap having a predetermined length. Referring to FIG. 3, the mesh member is formed to have a length corresponding to a length by which the inner and outer fabrics are desired to be divided, and may be symmetrically formed based on a center axis C-C' in a longitudinal direction of the mesh member.

In the meantime, as the bonding member 20, a fabric having a shape, in which at least a partial region is cut, as well as the mesh member, may be used.

Next, as illustrated in FIG. 4, a folding line F is formed by folding both ends of the bonding member 20 in the center axis (C-C') direction. In this case, both ends of the bonding member 20 based on the folding line F are referred to attachment surfaces 21.

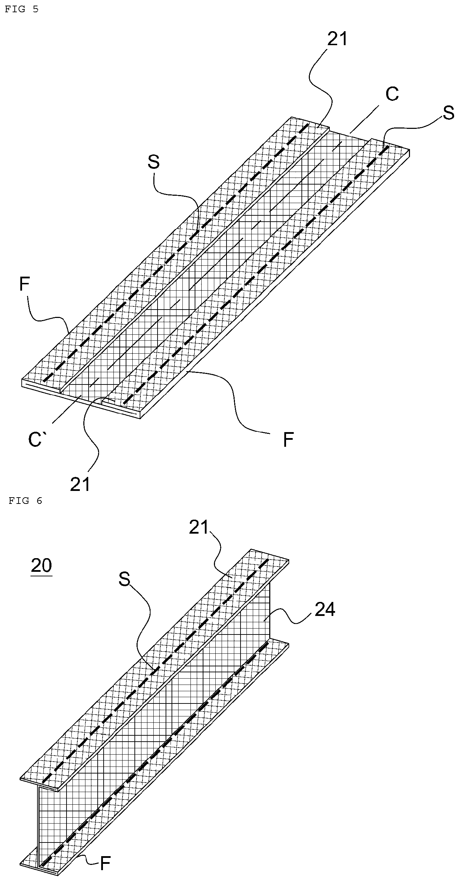

Next, as illustrated in FIG. 5, a sewing line S is formed in a longitudinal direction along a center of the attachment surface 21. Subsequently, when the attachment surfaces 21 are unfolded based on the sewing lines S, the bonding member 20 has a shape of H as illustrated in FIG. 6. In this case, the attachment surfaces 21 face upward and downward, respectively, and a division surface 24 connecting the attachment surface 21 and the sewing line S is provided.

In this case, the respective elements, such as the attachment surfaces 21, the folding lines F, and the sewing lines S, of the bonding member 20 may be symmetrically formed based on the center axis C-C' in the longitudinal direction. The attachment surfaces 21, the folding lines F, and the sewing lines S are symmetrically formed as described above, thereby preventing a phenomenon, in which a final processed fabric article is distorted in an attachment surface portion.

The attachment surfaces 21 are bonded to the aforementioned inner and outer fabrics, respectively, and the division surface 24 divides the space between the inner and outer fabrics to prevent a phenomenon in which the filling and the like lean to one side.

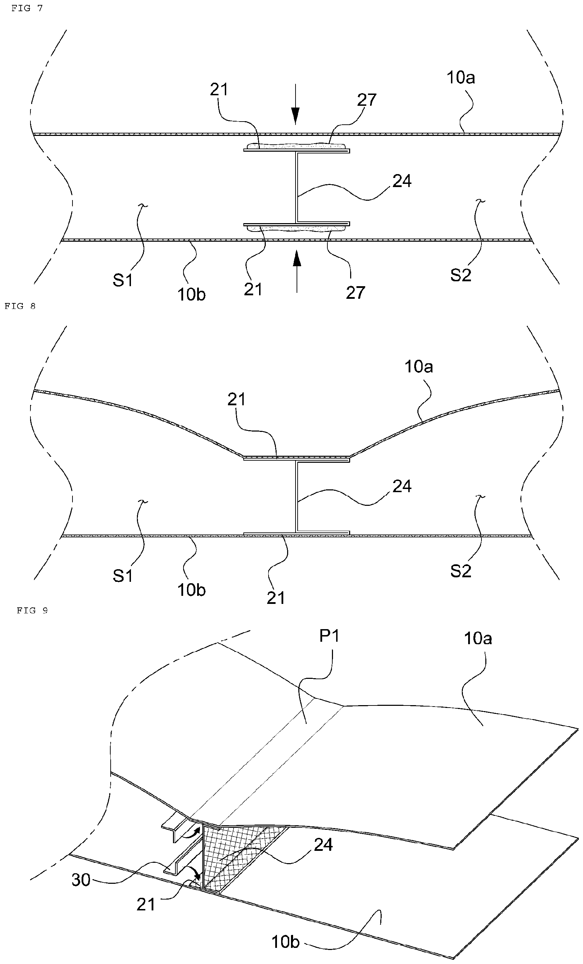

A connection relation of the bonding member will be described with reference to FIGs. 7 to 8. FIGs. 7 and 8 are schematic diagrams illustrating a case where a space between fabrics is divided by using the bonding member according to the exemplary embodiment.

In particular, as illustrated in FIG. 7, the attachment surfaces 21 of the bonding member are disposed to face the inner fabric 10b and the outer fabric 10a and then are attached to the inner fabric 10b and the outer fabric 10a. In this case, the attachment surfaces 21 may be attached to the inner fabric 10b and the outer fabric 10a by applying an adhesive 27 onto the attachment surfaces 21.

When the bonding member is completely attached, the upper attachment surface 21 is fixed to the outer fabric 10a and the lower attachment surface 21 is fixed to the inner fabric 10b. In this case, the division surface 24 divides the internal space between the inner fabric 10a and the outer fabric 10b into a first space S1 and a second space S2.

As described above, each of the first space S1 and the second space S2 divided by the division surface 24 may be filled with fillings for keeping warmth and the like. In this case, hair of mammals, hair of birds, cotton, and synthetic resin cotton or a combination thereof may be used as the fillings.

A fabric bonding structure according to another exemplary embodiment will be described with reference to FIGS. 6 and 9. FIG. 9 is a cut perspective view schematically illustrating a state of a processed fabric article according to another exemplary embodiment.

First, referring to FIG. 6, when excessive tensile force is applied to the upper and lower attachment surfaces 21, force may be concentrated to the sewing line S. The bonding member may further include a reinforcing member for preventing fracture of the bonding member 20 when an excessive tensile load is concentrated to the sewing line S.

As illustrated in FIG. 9, the reinforcing member 30 may be formed of a fabric having a predetermined length. The reinforcing member 30 may be formed of a mesh fabric, similar to the bonding member, but is not limited thereto, and may be formed of various fabrics.

The reinforcing member 30 is formed in a strap shape having a relatively smaller width than that of the bonding member. Both sides of the reinforcing member 30 are attached to the attachment surface 21 and the division surface 24 of the bonding member, respectively. The pair of reinforcing members 30 may be provided and attached to the upper and lower attachment surfaces 21. In this case, the reinforcing member 30 may be attached to the other side of the folding line.

It will be appreciated by those skilled in the art that the present invention described above may be implemented into other specific forms without departing from the technical spirit thereof or essential characteristics. Thus, it is to be appreciated that embodiments described above are intended to be illustrative in every sense, and not restrictive. The scope of the present invention is represented by the claims to be described below rather than the detailed description, and it should be interpreted that all the changes or modified forms, which are derived from the meaning of the scope of the claims, the scope of the claims, and the equivalents thereto, are included in the scope of the present invention.

## Claims

1. A structure for bonding a fabric, comprising:
a first fabric;
a second fabric provided so as to be adjacent to the first fabric; and
a bonding member, in which attachment surfaces attached to the first fabric and the second fabric, respectively, and sewing lines spaced apart from the attachment surfaces and sewed in a state of being in contact with center portions of the attachment surfaces are sequentially formed from both ends toward an inner side based on a center axis in a longitudinal direction of the bonding member.

2. The structure of claim 1, wherein a folding line, along which the bonding member is folded, is formed between the attachment surface and the sewing line.

3. The structure of claim 2, wherein the bonding member is provided with a division surface defined as a predetermined region between the sewing lines, and
the division surface divides a space between the first fabric and the second fabric.

4. The structure of claim 3, further comprising:
a reinforcing member, of which both lateral surfaces are attached to the attachment surface and the division surface, respectively.

5. The structure of claim 1, wherein the bonding member is formed of a mesh fabric.

6. The structure of claim 1, wherein the attachment surfaces of the bonding member are bonded to the first fabric and the second fabric, respectively, by an adhesive.

7. The structure of claim 1, wherein the bonding member is formed in a strap form.

8. The structure of claim 1, wherein the attachment surface and the sewing line are symmetrically formed with respect to the center axis.

9. The structure of claim 1, wherein fillings are filled in a space between the first fabric and the second fabric divided by the bonding member.

10. The structure of claim 9, wherein the fillings include at least one of hair of mammals, hair of birds, cotton, and synthetic cotton.

11. A processed fabric article having the structure of bonding the fabric according to any of claims 1 to 8.
